# EUROPEAN PATENT SPECIFICATION

(11) **EP 2 912 830 B1**
(45) Date of publication and mention of the grant of the patent: **06.01.2016**
(21) Application number: 14702082.0
(22) Date of filing: 08.01.2014
(51) Int. Cl.: H04L 29/08

(54) **METHOD, NODE AND DISTRIBUTED SYSTEM FOR CONFIGURING A NETWORK OF CDN CACHING NODES**
VERFAHREN, KNOTEN UND VERTEILTES SYSTEM ZUR KONFIGURATION EINES NETZWERKS AUS INHALTAUSGABENETZWERK-ZWISCHENSPEICHERKNOTEN
PROCÉDÉ, NOEUD ET SYSTÈME RÉPARTI POUR UNE CONFIGURATION DE RÉSEAU DE NOEUDS DE MISE EN ANTÉMÉMOIRE DE RÉSEAU CDN

(43) Date of publication of application: 02.09.2015
(73) Proprietor: Telefonaktiebolaget L M Ericsson (publ), 164 83 Stockholm (SE)
(72) Inventor: ZHU, Zhongwen, Ville Saint-Laurent, Québec H4R 3H7 (CA); HAYDOCK, Lawrence, Sainte-Adele, Québec J8B 2W7 (CA); HOSSAIN, Nazin, Brossard, Québec J4Y 3G1 (CA)
(74) Representative: Röthinger, Rainer
(86) International application number: PCT/IB2014/058131
(87) International publication number: WO 2015/104583

(56) References cited:
- EP-A1- 2 063 598
- US-A1- 2005 228 856
- US-A1- 2012 072 526

## Description

### TECHNICAL FIELD

The present invention relates to a method for configuring a network of Content Delivery Network (CDN) caching nodes deployed as a hierarchy of virtual CDN caching nodes collocated in a single layer of physical CDN caching nodes.

### BACKGROUND

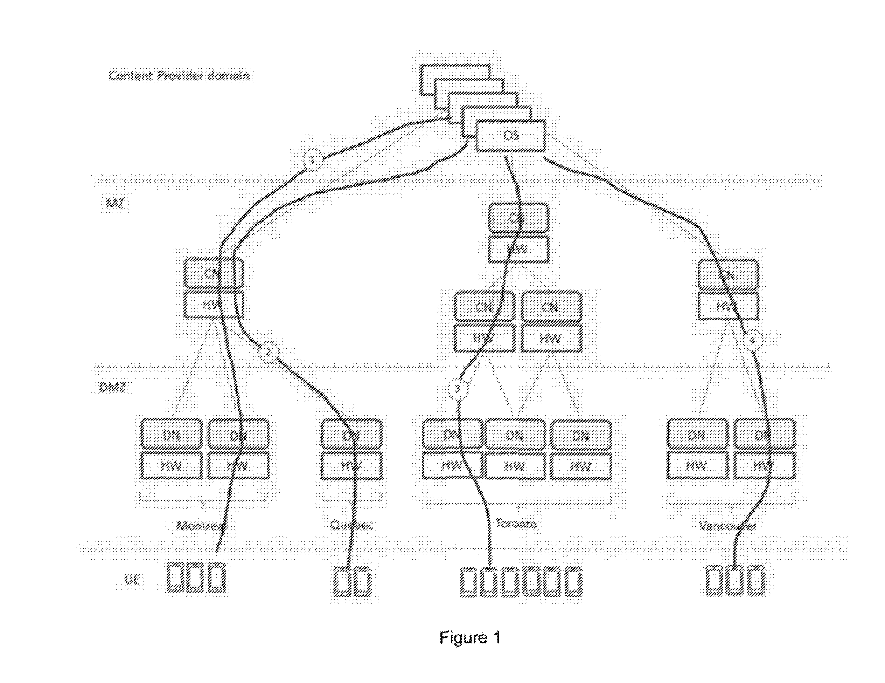

Figure 1 illustrates an example of a traditional hierarchical Content Delivery Network (CDN). All the delivery nodes (DNs) are deployed in the De-Militarized Zone (DMZ) domain. In computer security, a DMZ (sometimes referred to as a perimeter network) is a physical or logical sub network that sits between a trusted internal network, such as a corporate private LAN, and an untrusted external network, such as the public Internet. Based upon media popularity, media contents are propagated to DNs that are closest to end users using a User Equipment (UE), in order to provide a good user experience. For instance, media content directed to the users located in Montreal will follow path 1; media content directed to the users located in Quebec will follow path 2; media content directed to the users located in Vancouver will follow path 4, etc. Subsequent requests for content are serviced by the DNs closest to the end users, also called Content Consumers (CCs), rather than by the Origin Servers (OSs), and in doing so latency and playback interruptions are minimized by shortening the path between the content and the content consumer, and by minimizing traffic on the network core.

For security reasons, core nodes are not accessible to end users. They are deployed in the Militarized Zone (MZ) domain. A MZ domain is isolated, for example through a Firewall, to protect it from any security threats from LAN/WAN users. In very high traffic network segments, for the purpose of efficient network utilization, a multi-layer hierarchy of Core Nodes (CNs) may be deployed. Figure 1 illustrates such a configuration for path 3 where two layers of CNs are configured between the OSs and the DNs.

An OS may be located in the content provider's domain or in the domain of the CDN Operator. It contains media content that is delivered via CNs and DNs through the CDN.

It is a very time-consuming task to set up or configure a Content Delivery Network from scratch, or to add a new delivery node into an existing CDN. Furthermore, once a CDN is live, it becomes more difficult to adjust the CDN configuration to adapt to the changing patterns of traffic load and network usage.

As traffic increases in a CDN there is a need to add more delivery nodes and core nodes. The introduction of these new nodes requires a significant effort to configure the newly added nodes, and to re-configure the existing nodes.

There are a number of problems with traditional CDNs. For example, the configurations do not lend themselves to rapid reconfigurations. This becomes a severe issue when increasing the number of DNs to be managed in a CDN, for example, as the CDN expands into the Radio Access Network (RAN). Today's networks are complicated to scale as usage increases over time and network topologies at any given time may result in overused or underused nodes, or content not served from the expected nodes. This in turn can lead to lower or inconsistent Quality of Experience (QoE), cost inefficiencies, etc.

Prior art is know from US 2012/072526 A1, US 2005/228856 A1 and EP 2 063 598 A1.

### Summary

A method and server that obviate or mitigate at least some of the above described disadvantages are therefore provided.

There is provided a method as in claim 1 for configuring a network of Content Delivery Network (CDN) caching nodes deployed as a hierarchy of virtual CDN caching nodes collocated in a single layer of physical CDN caching nodes. The method comprises detecting a modification in the single layer of physical CDN caching nodes. The method further comprises receiving traffic load information from the physical CDN caching nodes. The method also comprises computing a new network configuration for the virtual CDN caching nodes based on the detected modification, the received traffic load information and geographic locations of the physical CDN caching nodes. And the method comprises configuring the single layer of physical CDN caching nodes in accordance with the new network configuration.

There is also provided a distributed system as in claim 11 for configuring a network of Content Delivery Network (CDN) caching nodes comprising a hierarchy of virtual CDN caching nodes collocated in a single layer of physical CDN caching nodes, each physical CDN caching node running a client-server application and at least one physical CDN caching node running a server instance of the client-server application. The at least one physical delivery node comprises a processor and memory, the memory containing the server instance of the client-server application executable by the processor whereby the at least one physical CDN caching node is operative to detect a modification in the single layer of physical CDN caching nodes. The at least one physical CDN caching node is further operative to receive traffic load information from the physical CDN caching nodes. The at least one physical CDN caching node is also operative to compute a new network configuration for the virtual CDN caching nodes based on the detected modification, the received traffic load information and geographic locations of the physical CDN caching nodes. And the at least one physical CDN caching node is operative to configure the single layer of physical CDN caching nodes with the new network configuration.

There is further provided a server as in claim 20 for configuring a network of Content Delivery Network (CDN) caching nodes deployed as a hierarchy of virtual CDN caching nodes collocated in a single layer of physical CDN caching nodes, comprising a processor and a memory. The memory contains instructions executable by the processor whereby the server is operative to detect a modification in the single layer of physical CDN caching nodes. The server is further operative to receive traffic load information from the physical CDN caching nodes. The server is also operative to compute a new network configuration for the virtual CDN caching nodes based on the detected modification, the received traffic load information and geographic locations of the physical CDN caching nodes. And the server is operative to configure the single layer of physical CDN caching nodes in accordance with the new network configuration.

There is also provided a server for configuring a network of Content Delivery Network (CDN) caching nodes deployed as a hierarchy of virtual CDN caching nodes collocated in a single layer of physical CDN caching nodes. The server comprises a detection module for detecting a modification in the single layer of physical CDN caching nodes. The server further comprises a reception module for receiving traffic load information from the physical CDN caching nodes. The server also comprises a computation module for computing a new network configuration for the virtual CDN caching nodes based on the detected modification, the received traffic load information and geographic locations of the physical CDN caching nodes. And the server comprises a configuration module for configuring the single layer of physical CDN caching nodes with the new network configuration.

### BRIEF DESCRIPTION OF THE DRAWINGS

Figure 1 is a schematic illustration of a traditional Content Delivery Network.
Figure 2 is a schematic illustration of an overview of a network, from the content provider end to the content consumer end, according to an embodiment.
Figure 3 is a schematic illustration of a Content Delivery Network, according to an embodiment.
Figure 4 is a flowchart of a method executed by the CDN Management System, according to an embodiment.
Figure 5 is a flowchart of a method executed when a new node joins the network of CDN caching nodes, according to an embodiment.
Figure 6 is a flowchart of a method for reconfiguring the network of CDN caching nodes, according to an embodiment.
Figure 7 is a flowchart of a method for calculating the configuration of the network of CDN caching nodes, according to an embodiment.
Figure 8 is a schematic illustration of network connections among different CDN caching nodes, according to an embodiment.
Figure 9a is a schematic illustration of different configurations in a single delivery node, according to an embodiment.
Figure 9b is a schematic illustration of a configuration of a single CDN caching node, according to an embodiment.
Figure 9c is another schematic illustration of a configuration of a single CDN caching node, according to an embodiment.
Figure 10 is a schematic illustration of a traffic flow between client and server instances of the CDN Management System (CDNMS), according to an embodiment.
Figure 11 is a schematic illustration of a server, according to an embodiment.
Figure 12 is schematic illustration of a server, according to another embodiment.

### DETAILED DESCRIPTION

The various features of the invention will now be described with reference to the figures. These various aspects are described hereafter in greater detail in connection with exemplary embodiments and examples to facilitate an understanding of the invention, but should not be construed as limited to these embodiments. Rather, these embodiments are provided so that the disclosure will be thorough and complete, and will fully convey the scope of the invention to those skilled in the art.

Many aspects of the invention are described in terms of sequences of actions or functions to be performed by elements of a computer system or other hardware capable of executing programmed instructions. It will be recognized that the various actions could be performed by specialized circuits, by program instructions being executed by one or more processors, or by a combination of both. Moreover, the invention can additionally be considered to be embodied entirely within any form of computer readable carrier or carrier wave containing an appropriate set of computer instructions that would cause a processor to carry out the techniques described herein.

In some alternate implementations, the functions/acts may occur out of the order noted in the sequence of actions. Furthermore, in some illustrations, some blocks may be optional and may or may not be executed; these are generally illustrated with dashed lines.

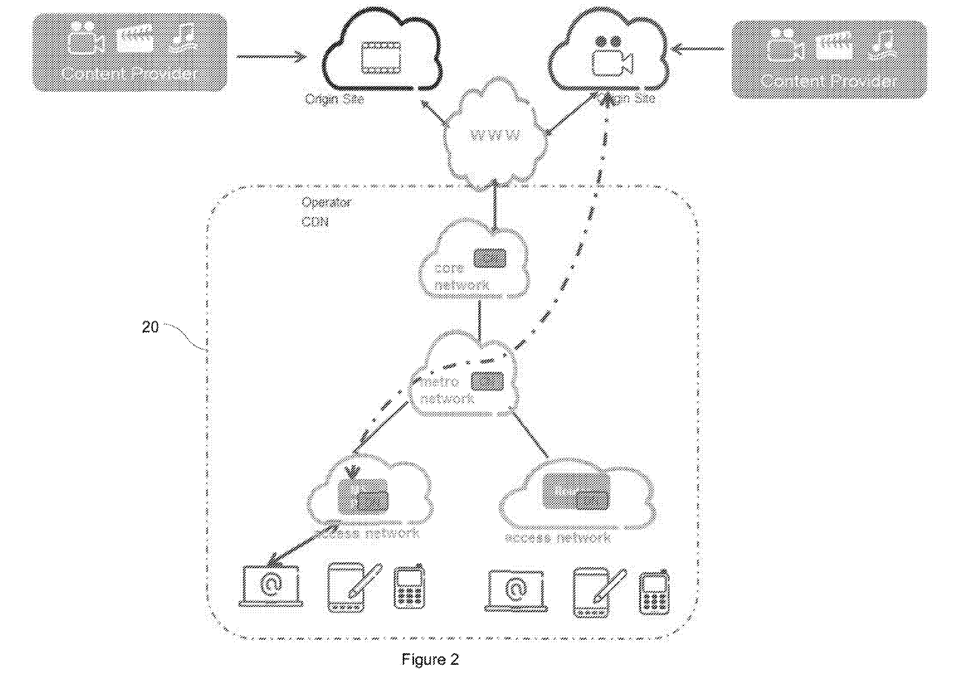

Figure 2 presents an overview of an exemplary deployment of an operator Content Delivery Network (CDN) 20 in relation to content providers and the internet, for illustrative purposes.

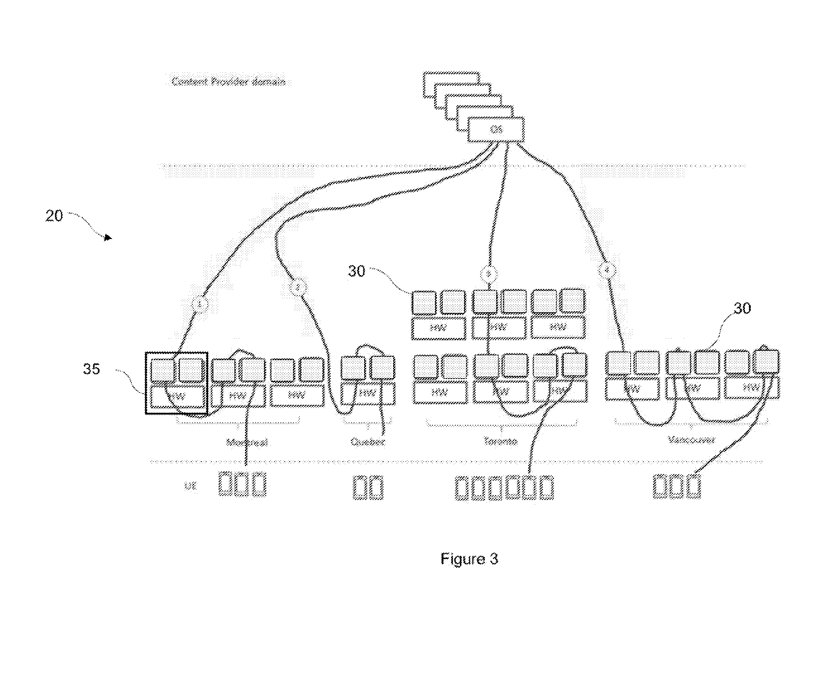

Figure 3 illustrates a Content Delivery Network 20 which merges two physical layers into one, namely the Core Node (CN) layer of the Militarized Zone (MZ) domain and the Delivery Node (DN) layer of the De-Militarized Zone (DMZ) domain, such as shown in figure 1. Both layers are now collocated. It has to be noted that although both layers can now be collocated in a single physical node, it does not prevent separation of the virtual nodes in militarized and de-militarized zones. For instance, traffic served by virtual nodes of both zones could travel along the same wire. However, in such a case, the network interface card (NIC) could be configured with two separate interfaces, one for traffic in the demilitarized zone (IP1) and one for traffic in the militarized zone (IP2). Reserved Internet Protocol (IP) addresses ranges could also be assigned to MZ and DMZ. Public IP addresses would be defined as pertaining to the DMZ in firewall rules; private IP addresses would also be defined as pertaining to the MZ in the firewall rules, for example. Configured this way, only selected traffic could be handled with private IP addresses, and therefore node functionality in the militarized zone would be protected from external attacks. Traffic between nodes would travel along internal private interfaces within the MZ. In this example, the hypervisor or any operating system would handle the mapping between physical NICs and virtual NICs.

From this point forward, CNs and DNs will be differentiated as pertaining to different levels of the hierarchy of nodes. No physical separation exists in the presented embodiments between both types of nodes which are now virtual. CNs and DNs will therefore be generally designated as virtual CDN caching nodes 30 pertaining to a hierarchy of virtual CDN caching nodes, where former CNs and DNs pertain to different levels of the hierarchy of virtual CDN caching nodes.

Each physical CDN caching node 35 is a standalone Hardware (HW) unit. The physical CDN caching node 35 can be configured with a single virtual CDN caching node 30 (pertaining to any level of the hierarchy of virtual CDN caching nodes) or with a hierarchy of virtual CDN caching nodes. In some embodiments it could be envisioned that a physical CDN caching node could contain several virtual CDN caching nodes of a same level of the hierarchy. For example, these virtual CDN caching nodes of a same level could be serving users with different levels of services such as premium of basic, users from different service providers, such as Bell™ or Rogers™, or users using different types of services such as linear video or video on demand. These virtual CDN caching nodes of a same level could also be handling different types of contents or of traffic or different geographic areas, etc.

Each physical CDN caching node 35 of the CDN 20 is connected through a resource pool, in a memory, which is managed by a CDN Management System (CDNMS). The CDNMS utilizes traffic load and geographic location information from each of the physical CDN caching nodes in the CDN 20 to perform network configurations or reconfigurations based on demands from virtual CDN caching nodes 30 of different levels of the hierarchy and based on the network connections configuration. Configurations or reconfigurations are performed for improving the overall media delivery efficiency with the benefits of ensuring a level of security and minimizing operational and infrastructure costs.

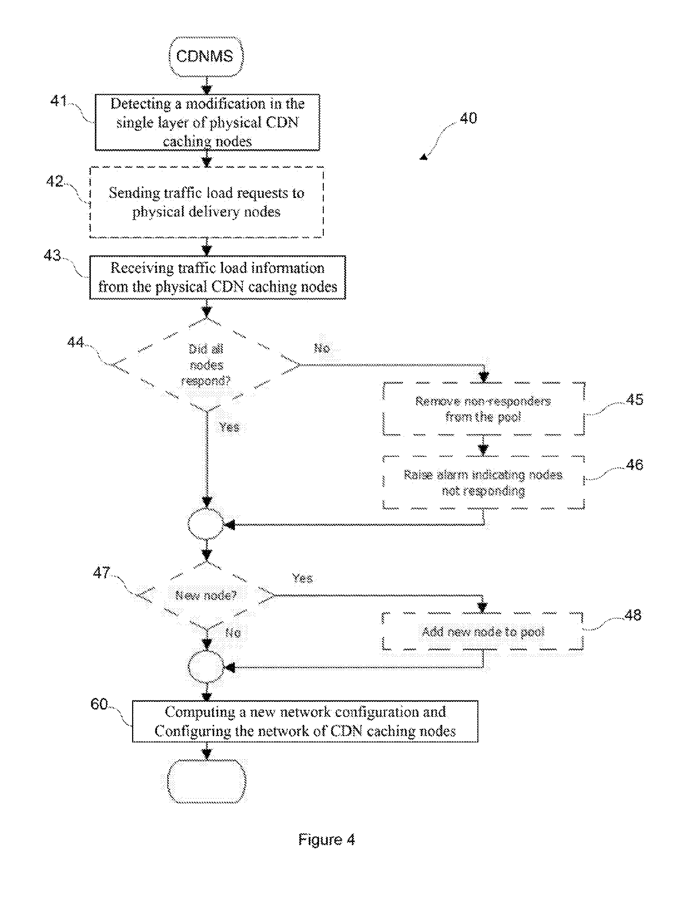

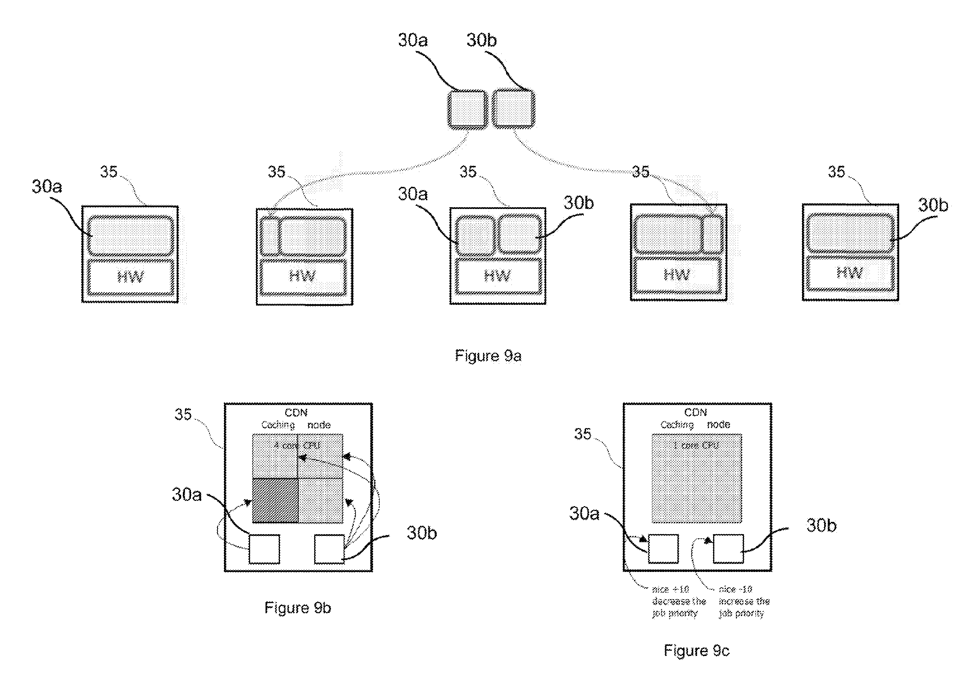

Figure 4 illustrates a method 40 for configuring a network of CDN caching nodes deployed as a hierarchy of virtual CDN caching nodes collocated in a single layer of physical CDN caching nodes. Virtual CDN caching nodes 30 in a first level of the hierarchy (corresponding to former core nodes) can send delivery content towards virtual CDN caching nodes 30 in a second level of the hierarchy (corresponding to former delivery nodes). In some embodiments, each physical CDN caching node 35 can either comprise only one virtual CDN caching node or a plurality of virtual CDN caching nodes. A physical CDN caching node can comprise, for example, a first virtual CDN caching node in a first level of the hierarchy collocated with a second virtual CDN caching node in a second level of the hierarchy. A person skilled in the art would readily understand that the number of levels is not limited to two. The person skilled in the art would also understand that the plurality of virtual CDN caching nodes could comprise two or more nodes of the same level, as explained earlier. The collocated virtual CDN caching nodes may have access to a same proportion of the capacity of the physical CDN caching node or to different proportions of the capacity of the physical CDN caching node, as will be explained later in relation with Figure 9a.

In the method, at least an identifier, a capacity and a geographic location of each physical CDN caching node of the network of CDN caching nodes are stored in a memory. The memory can be a dedicated physical storage or a portion of the memory of at least one or more physical CDN caching node or other node such as a server or virtual machine in the cloud. The memory can therefore be located in one physical location or it can be distributed across many different physical locations. The memory can be volatile or permanent.

The method for configuring the network of CDN caching nodes can be executed in a client-server software application running on the physical CDN caching nodes or can be executed in at least one dedicated server. When the method is executed in client-server software, the server application can run either in redundancy on two or more physical CDN caching nodes, other servers or virtual machines or in a distributed fashion on two or more physical CDN caching nodes, other servers or virtual machines.

For example, different instances of the server part of the software, running on different CDN caching nodes could be responsible for configuring different portions of the CDN, e.g. physically close to the CDN caching nodes, either individually or in collaboration.

The method for configuring the network of CDN caching nodes comprises a step of detecting a modification in the single layer of physical CDN caching nodes 41. The modification in the network of CDN caching nodes can be an addition of a physical CDN caching node, a removal of a physical CDN caching node, a change in the traffic load of at least one of the physical CDN caching nodes, a network triggered event, a timer, etc.

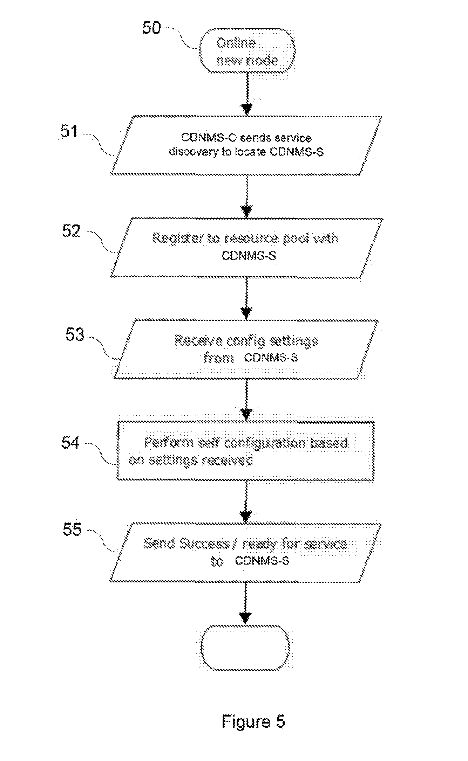

Referring now additionally to figure 5 which details steps executed if a new physical CDN caching node is added 50, a request for joining the network is sent by the new physical CDN caching node and received by a server instance of the CDNMS.

The service discovery mechanism, step 51, can be executed as follows. For example, an instance of CDNMS-Client (CDNMS-C) can create a request to obtain connectivity to CDNMS-Server (CDNMS-S). In an embodiment, the CDNMS-C broadcasts or multicasts the request to get a specific service. The CDNMS-S in the network listens for the broadcast or multicast, pick up the request, and respond. In another embodiment, where there is a central repository, the CDNMS-C sends the request for a specific service to the central repository server that has captured all the advertised services on the network and the central repository server matches the requested service to a discovered service and sends a response. The CDNMS-C retrieves the address of the CDNMS-S that provides the required service from the response. Then the CDNMS-C can contact the CDNMS-S directly.

If the service connectivity request is successful then the physical CDN caching node running the CDNMS-C is provided with all the necessary information to communicate with the CDNMS-S. If the request fails then the physical CDN caching node receives an error message containing an error string describing the cause of the connectivity failure.

Once connected to the CDNMS-S, the CDNMS-C can send requests and receive responses via messages. For example, a message from the CDNMS-C to the CDNMS-S can comprise a target service name/ID such as, for instance, CDNMS001, a CDN caching node name, a CDN caching node description, a status: NEW/UPDATE/REMOVE, a RATIO-for-CDN caching nodes of different levels of the hierarchy, a percentage of the CPU for traffic such as, for instance, 10%, a bandwidth usage such as, for instance, 200 Mpbs, a memory usage such as, for instance, 1GB, a quota for bandwidth such as, for instance, 1000Mbps, a quota for memory such as, for instance, 10 GB, etc. The CDNMS-C can also utilize this message to convey a status report (including the join and leave the network request).

The message from the CDNMS-S to the CDNMS-C can comprise a target CDN caching node name such as, for instance, CDNMC101, a service name or ID, a service description, a RATIO-for-CDN caching nodes of different levels of the hierarchy, a quota for bandwidth such as, for instance, 1000Mbps, a quota for memory such as, for instance, 10 GB. This can be implemented via JavaScript Object Notation (JSON) or Extensible Markup Language (XML), for example. The parameters received from the CDNMS-S are used by the CDNMS-C to configure the virtual CDN caching nodes therein.

The CDNMS registers the new physical CDN caching node with the resource pool, in the memory, at step 52. The request contains a new physical CDN caching node capacity (in terms of processing or traffic capacities) and new physical CDN caching node geographic location information, which can be otherwise called configuration settings, at step 53. The physical CDN caching node may perform a self-configuration of its virtual CDN caching nodes, at step 54. Finally the physical CDN caching node may send a success or ready for service message to the CDNMS, at step 55.

If a physical CDN caching node is removed, a request for leaving the network may be sent from the physical CDN caching node and received by the CDNMS. The information pertaining to this departing physical CDN caching node can then be removed from the memory, or resource pool. If a request for reconfiguration of the network is received, the request may contain the current traffic load for the physical CDN caching node making the request. Many requests for reconfiguration may be received at the same time or at different times.

Returning to figure 4, the method 40 for configuring the network of CDN caching nodes further comprises receiving traffic load information from the physical CDN caching nodes, step 43. This step can be responsive to a step of sending traffic load requests to a subset of the physical CDN caching nodes, step 42. This step can also be responsive to a step of sending traffic load requests to all the physical CDN caching nodes, also step 42.

The method can further comprise a step of verifying if all the nodes responded to the request, step 44. If not all the nodes responded to the request, the nodes which did not respond can be removed from the resource pool, in the memory, step 45, and an alarm can be raised regarding the non-responsive nodes, step 46. Another verifying step can be executed, namely verifying if a new node been added, step 47. If a new node is added, it can be added to the resource pool, in the memory, step 48. The flowchart for the addition of a physical CDN caching node is illustrated at figure 5 presented previously.

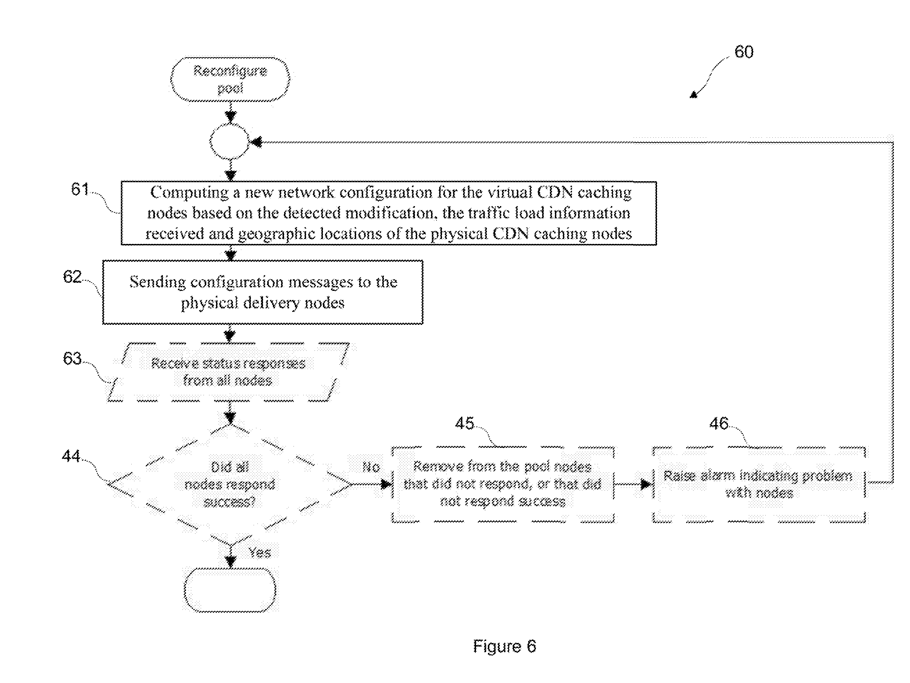

The method further comprises a step of computing a new network configuration and configuring the network of CDN caching nodes, step 60. Figure 6 illustrates in more details the steps of computing and reconfiguring previously illustrated in figure 4 at step 60. The method for configuring the network of CDN caching nodes comprises computing a new network configuration for the virtual CDN caching nodes based on the detected modification, the received traffic load information and geographic locations of the physical CDN caching nodes, step 61.

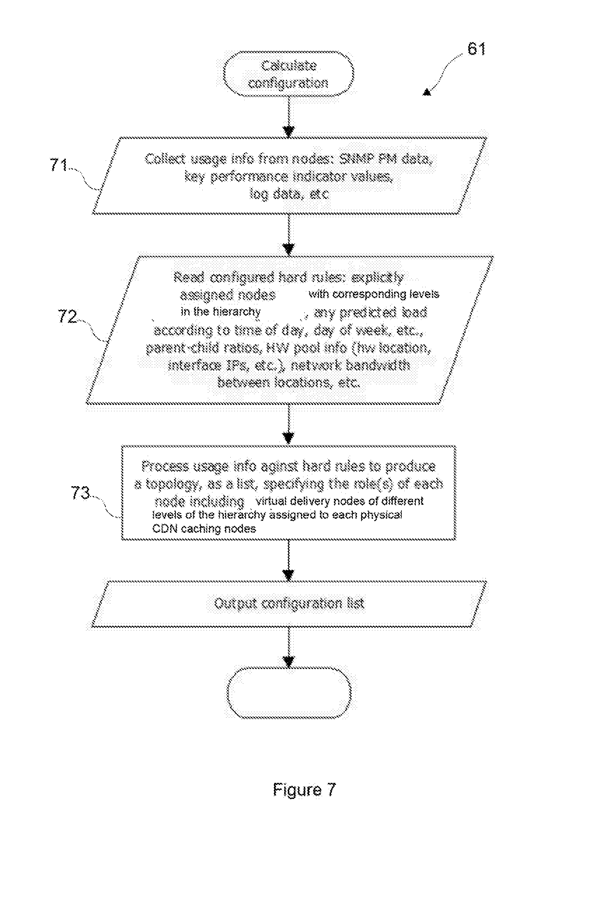

The step of computing 61 is further defined in figure 7 and can comprises collecting additional data, step 71, reading rules, stored in the memory, associated with each physical CDN caching node, step 72. The memory can be located in one physical location or it can be distributed across many different physical locations. The memory can be volatile or permanent. The step of computing can comprise comparing the capacities of the physical CDN caching nodes to the traffic loads received and computing the new network configuration satisfying the rules, for the virtual CDN caching nodes, based on the detected modification, and distributing a total traffic load to the physical CDN caching nodes according to their capacities, step 73.

From the physical device, there is a hard throughput (bandwidth) limit on Network Interface Card (NIC). The target CDN bandwidth is configured based upon that hard limit. The bandwidth usage of the CDN caching nodes is measured against this target CDN bandwidth. The optimal ratio for CDN caching nodes is determined. Then the results are pushed to reconfigure the CDN network. The optimization/reconfiguration can be done to achieve near optimal bandwidth allocated for delivering the content to the end users. The optimization solution might lead to a node that becomes 100% dedicated to a specific level of the hierarchy. Other factors, e.g. CPU, memory, disk usage, etc. may additionally be used in the calculation. The optimization/reconfiguration can be done either in a single server, regional (i.e. among selected group of CDN caching nodes) or global level (i.e. all the CDN caching nodes).

Returning to figure 6, the method for configuring the network of CDN caching nodes comprises configuring the single layer of physical CDN caching nodes with the new network configuration. This can be done by sending configuration messages to the physical CDN caching nodes, step 62. Further steps of receiving status responses from the CDN caching nodes, step 63, verifying if all the CDN caching nodes responded, step 44, removing from the memory the nodes that did not respond, step 45 and raising an alarm, step 46 can be executed.

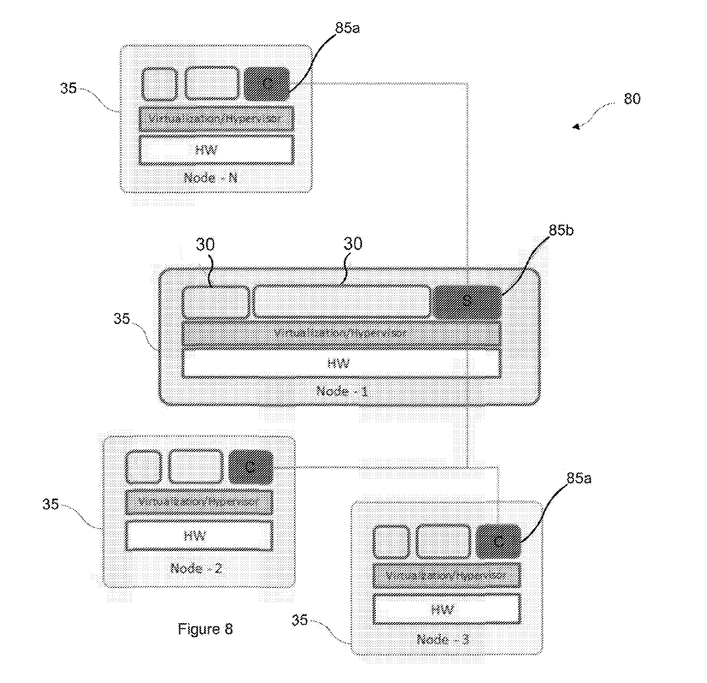

Figure 8 illustrates an exemplary distributed system 80 for configuring a network of CDN caching nodes. The distributed system comprises a hierarchy of virtual CDN caching nodes 30 collocated in a single layer of physical CDN caching nodes 35, each physical CDN caching node 35 running a client-server application. In the system, at least one physical CDN caching node runs a server instance of the application. The server instance of the application is operative execute the steps of the method described previously.

The distributed system, also referred to as CDN Management System (CDNMS) manages all the CDN caching nodes in the CDN. CDNMS has both client CDNMS-Client (CDNMS-C) 85a and server CDNMS-Server (CDNMS-S) 85b features to facilitate the communication and management among all the CDN caching nodes. CDNMS-S 85b runs on one, two or more selected physical CDN caching nodes 35 (at least two for High Availability (HA)) or on a dedicated server in the content delivery network. The connection among these nodes is shown in figure 8. The virtualization and Hypervisor can be used in the implementation of an embodiment.

Figure 9a illustrates the distribution of the capacity of different physical CDN caching nodes 35 amongst the virtual CDN caching nodes 30 collocated thereon. In the leftmost case, the physical CDN caching node 35 comprises a single virtual CDN caching node of a first level of the hierarchy 30a using 100% of its capacity. In the three center cases, the physical CDN caching node 35 comprise a virtual CDN caching node of a first level of the hierarchy 30a and a virtual CDN caching node of an second level of the hierarchy 30b, both virtual CDN caching nodes share the total capacity in different proportions. In the rightmost case, the physical CDN caching node comprises a single virtual CDN caching node of a second level of the hierarchy 30b using 100% of its capacity. The optimization of the virtual CDN caching nodes capacity over the total CDN capacity can be configured to improve the overall CDN delivery efficiency, or to adapt the configuration to particular network needs or usage patterns. Virtual CDN caching nodes pertaining to more than two levels of the hierarchy could also be collocated on a same physical CDN caching node. Virtual CDN caching nodes pertaining to a same level of the hierarchy could also be collocated on a same physical CDN caching node.

Normally CDN caching nodes of lower levels of the hierarchy (and communicating with user devices) are deployed in DMZ since these nodes receive traffic requests from public Internet and CDN caching nodes of higher levels of the hierarchy are deployed in the back end or MZ so it is well protected by the Firewall of the operator's network. According to some embodiments, from the physical access point view, the CDN caching nodes of all levels of the hierarchy could be exposed to the public Internet directly. However, for virtual CDN, separation between virtual nodes on the same physical node can be easily obtained by configuration. This can be achieved at the Hypervisor level, as illustrated on figure 8. VMware™, for example, provides such kind the virtual separation via virtual switch. In a cloud environment, only virtual separation can be used, but the flexibility and elasticity from the cloud computing center lead to the efficient usage of the CDN. Virtualization software may therefore be used according to some embodiments. For example, a single system running VMware™, might run four VMs, three of which run virtual CDN caching node of a second level of the hierarchy 30b and one which runs a virtual CDN caching node of a first level of the hierarchy 30a. Alternatively if there are two VMs, a virtual CDN caching node of a second level of the hierarchy 30b could run on a VM using three vCPUs and a virtual CDN caching node of a first level of the hierarchy 30a could run on a VM using one vCPU.

Figure 9b illustrates an alternative embodiment where a processor with four cores is used. In this example, 75%, or three cores, are dedicated to a virtual CDN caching node of the second level of the hierarchy 30b and 25%, or one core is dedicated to a virtual CDN caching node of the first level of the hierarchy 30a.

Figure 9c illustrates another alternative embodiment, where a single core single CPU processor is used. In this embodiment the UNIX/Linux "nice" command can be used to prioritize (less nice) the CDN caching node of the second level of the hierarchy 30b, and de-prioritize (more nice) the CDN caching node of the first level of the hierarchy 30a. In this way the CDN caching node of the second level of the hierarchy 30b, with a higher priority, gets more CPU and computer resources than the CDN caching node of the first level of the hierarchy 30b running with a lesser priority.

Virtualization software can be used but is not necessary. Low power server blades, for example, could very well be used instead of virtualization software.

The following table presents some differences between a virtual CDN caching node of the first level of the hierarchy 30a (formerly called CN) and a virtual CDN caching node of the second level of the hierarchy 30b (formerly called DN). Both can be present on the nodes in different ratios.

**Table 1: Attributes of CDN caching nodes of first and second level**

| **Attribute** | **Virtual CDN caching node of the first level of the hierarchy (formerly CN)** | **Virtual CDN caching node of the second level of the hierarchy (formerly DN)** |
|---|---|---|
| Connectivity | All interfaces in the MZ | One interface in the MZ; one interface in the DMZ |
| Content distribution | One media at a time, the entire media delivered as fast as possible. | One chunk at a time, delivered at network friendly video pacing. |
| Storage | Strategic storage, lots of content. | Immediately popular content only - not more content than is needed. |
| Content life | ∼ hour - ∼ year timeframe | ∼ 15 minutes |
| Clients | CDN caching node of any level of the hierarchy | Content Consumers |
| Origin server access | Yes | No |
| Purpose | Save money by reducing core traffic and therefore network infrastructure, as well as traffic peering costs & transmission costs. | Assure QoE. |

Having the virtual CDN caching nodes in a single layer of physical CDN nodes provides a number of security advantages. Based on a machine to machine (M2M) mechanism, configuration changes are computed by the CDNMS-S. This mechanism insures that the firewall can be implemented and allows a tighter firewall configuration because human intervention can be avoided. Further, accidental denial-of-service attacks can be prevented due to the frequent reconfigurations of the distributed system. For example, if a video goes viral in a specific area, a counter may record a huge spike in traffic. The management of counters and alarms, in turn, relate to system performance. Performance management threshold mechanisms associated with counters can catch the traffic spike and trigger a re-configuration. Therefore an overload situation can be averted.

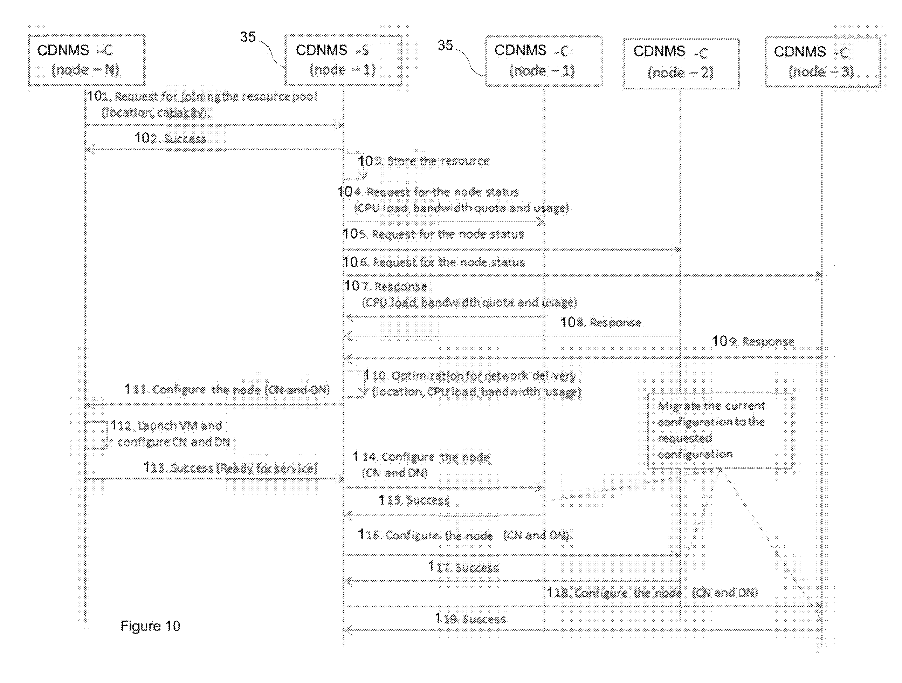

Figures 8 and 10, in conjunction, present a use case for automatically balancing the traffic load between physical CDN caching nodes 35 of first and second layers, based upon the location of the CDN caching nodes of the second layer and their traffic load. Turning to figure 10, the physical CDN caching node (Node-N) is a new node deployed in the network. CDNMS, that has both client and server functions, is launched in each physical CDN caching node 35. A request for joining the CDN resource pool is sent by CDNMS-C, located on Node-N, to the CDNMS-S that is located in Node-1 in reference to step 101 and 102.

The service discovery mechanism (i.e. how CDNMS-C of Node-N locates CDNMS-S of Node-1) can be done as previously described. Once connected, to the CDNMS-S, the CDNMS-C can send requests and receive responses via messages as also described previously.

The message from CDNMS-C, located on node-N, to CDNMS-S, located on node 1, can contain the location and capacity of the newly deployed physical CDN caching node, node-N. The location and capacity information is stored in the CDNMS's memory, which can be volatile or persistent storage. CDNMS-S then sends a request to all the nodes deployed in the CDN in order to collect the current traffic load or capacity usage and CPU load from each node, referring to step 103 to 109. Based on the information collected, CDNMS-S does, for example, the optimization for nearby CDN network to obtain an optimal configuration and capacity distribution between different virtual CDN caching nodes for each physical CDN caching node, referring to step 110.

CDNMS-S then sends the configuration parameters, including network connection setting and capacity distribution values to the newly deployed physical CDN caching node, node-N. CDNMS-C, on node-N, then starts operating virtual CDN caching nodes accordingly referring to step 111 to 113.

If a change in capacity distribution is identified for node-1, node-2 or node-3, CDNMS-S sends the updated configuration, including the network connection setting and capacity distribution values, to the corresponding nodes. After receiving the updated configuration, the CDNMS-C of each physical node migrate its current configuration of virtual CDN caching nodes to an updated configuration, referring to step 114 to 119.

A person skilled in the art would readily understand that the CDNMS-S can be implemented as a standalone server or in a cloud computing architecture instead of being located on the CDN caching nodes. Alternatively, in the scenario where CDNMS-Ss are located in the CDN caching nodes, and there are thousands of CDN caching nodes in a CDN (optionally expanding into the RAN and Wifi networks. Therefore, better overall or local performance may be obtained by fine tuning the CDN caching nodes nearby the CDNMS-Ss geographic locations. Therefore, in this case, the CDNMS-S serving the CDNMS-C in step 1 would collect node information from nearby CDN caching nodes and would not collect node information from all the CDN caching nodes in the network. Stated differently, the CDN can have a plurality of CDN caching node running instances of the CDNMS-S, geographically distributed and each being responsible of configuring a nearby subset of CDN caching nodes of the CDN. In such a case, the network should be organized such as the combined work of the CDNMS-S running across the CDN optimizes the whole CDN.

This method for configuring the network of CDN caching nodes provides a consistent level of Quality of Experience (QoE) even when the demands on the CDN are changing or when a Content Consumer (CC) is mobile. This method also facilitates scaling the network as demand grows, providing a consistent level of QoE to all subscribers, wherever they are located within the network, at all times of the day. This method provides a dynamic configuration mechanism to quickly and easily adapt to changing usage patterns and therefore reduce operational costs. This method further facilitates node usage optimization within the network while maintaining a level of security and QoE. This in turn minimizes capital expenditures, minimizes operational costs, maximizes return on investment and minimizes risks of attacks.

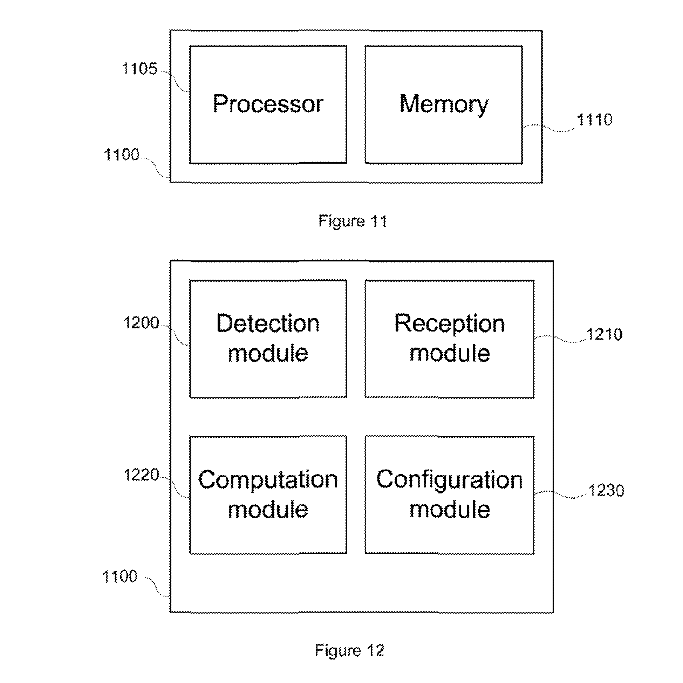

Figure 11 illustrates a server 1100 for configuring a network of CDN caching nodes deployed as a hierarchy of virtual CDN caching nodes collocated in a single layer of physical CDN caching nodes, comprising a processor 1105 and a memory 1110. The memory 1110 contains instructions executable by the processor 1105 whereby the server 1100 is operative to execute the steps of the method described previously. The server 1100 can be a server instance running virtually in the cloud, i.e. as a virtual machine. In this case, the processor corresponds to the physical processor or core of the machine on which the processing is actually done. The server 1100 can also be a server instance running in a physical node of the network such as, for example, a physical CDN caching node, or any other suitable node.

Figure 12 illustrates a server for configuring a network of CDN caching nodes deployed as a hierarchy of virtual CDN caching nodes collocated in a single layer of physical CDN caching nodes can comprise, in an alternate embodiment, a detection module 1200 for detecting a modification in the layer of physical CDN caching nodes, a reception module 1210 for receiving traffic load information from the physical CDN caching nodes, a computation module 1220 for computing a new network configuration for the virtual CDN caching nodes based on the modification detected, the traffic load information received and locations of the physical CDN caching nodes and a configuration module 1230 for configuring the network of physical CDN caching nodes with the new network configuration.

A person skilled in the art would understand that the modules can be implemented as a computer program running on a processor and that the modules are operative to execute the steps of the method described previously.

The server 1100 of figures 11 and 12 may include a communications interface. The communications interface generally includes analog and/or digital components for sending and receiving communications to and from other network nodes either directly or via a network. Those skilled in the art will appreciate that the block diagram of the server 1100 necessarily omits numerous features that are not necessary for a complete understanding of this disclosure.

Although all of the details of the server 1100 are not illustrated, the server 1100 comprises one or several general-purpose or special-purpose processors 1105 or other microcontrollers programmed with suitable software programming instructions and/or firmware to carry out some or all of the functionality of the physical CDN caching nodes described herein. In addition, or alternatively, the server 1100 may comprise various digital hardware blocks (e.g., one or more Application Specific Integrated Circuits (ASICs), one or more off-the-shelf digital or analog hardware components, or a combination thereof) (not illustrated) configured to carry out some or all of the functionality of the physical CDN caching nodes described herein. A memory 1110, such as a random access memory (RAM), may be used by the processor 1105 to store data and programming instructions which, when executed by the processor 1105, implement all or part of the functionality described herein. The server 1100 may also include one or more storage media (not illustrated) for storing data necessary and/or suitable for implementing the functionality described herein, as well as for storing the programming instructions which, when executed on the processor 1105, implement all or part of the functionality described herein. One embodiment of the present disclosure may be implemented as a computer program product that is stored on a computer-readable storage medium, the computer program product including programming instructions that are configured to cause the processor 1105 to carry out the steps described herein.

The invention has been described with reference to particular embodiments. However, it will be readily apparent to those skilled in the art that it is possible to embody the invention in specific forms other than those of the embodiments described above. The described embodiments are merely illustrative and should not be considered restrictive in any way. The scope of the invention is given by the appended claims, rather than the preceding description, and all variations and equivalents that fall within the range of the claims are intended to be embraced therein.

## Claims

1. A method for configuring a network of Content Delivery Network, CDN, caching nodes deployed as a hierarchy of virtual CDN caching nodes (30) collocated in a single layer of physical CDN caching nodes (35), comprising:
detecting (41) a modification in the single layer of physical CDN caching nodes (35);
receiving (43) traffic load information from the physical CDN caching nodes (35);
computing (60, 61) a new network configuration for the virtual CDN caching nodes (30) based on the detected modification, the received traffic load information and geographic locations of the physical CDN caching nodes (35); and
configuring the single layer of physical CDN caching nodes (35) in accordance with the new network configuration.

2. The method of claim 1, wherein the virtual CDN caching nodes (30) in a first level of the hierarchy (30a) send delivery content towards virtual CDN caching nodes (30) in a second level of the hierarchy (30b),
wherein, optionally, a plurality of the physical CDN caching nodes (35) comprises a first virtual CDN caching node (30) in the first level of the hierarchy (30a) collocated with a second virtual CDN caching node (30) in the second level of the hierarchy (30b).

3. The method of any of the preceding claims, wherein at least one of the physical CDN caching nodes (35) comprises a first and second collocated virtual CDN caching nodes (30) in a same level of the hierarchy (30a, 30b).

4. The method of claim 2 or 3, wherein the collocated first and second virtual CDN caching nodes (30) have access to a different proportion of a capacity of the physical CDN caching node (35).

5. The method of any of the preceding claims, wherein the modification in the network of CDN caching nodes comprises an addition (48) of a physical CDN caching node (35), a removal (45) of a physical CDN caching node (35) or a change in a traffic load of at least one of the physical CDN caching nodes (35).

6. The method of any of the preceding claims, wherein the step of detecting (41) comprises:
receiving a request for joining the network with a new physical CDN caching node (35) capacity and new physical CDN caching node (35) geographic location, receiving a request for leaving the network, or
receiving a request for reconfiguration of the network with current traffic load for at least one physical CDN caching node (35).

7. The method of any of the preceding claims, wherein at least an identifier, a capacity and a geographic location of each physical CDN caching node (35) of the network of CDN caching nodes are stored in a memory (1110),
wherein, optionally, the step of computing (61) comprises:
reading (72) rules, stored in the memory (1110), associated with each of the physical CDN caching nodes (35);
comparing (73) the capacities of the physical CDN caching nodes (35) to the traffic loads received; and
computing (73) the new network configuration satisfying the rules, for the virtual CDN caching nodes (30), based on the detected modification, and distributing a total traffic load to the physical CDN caching nodes (35) according to their capacities.

8. The method of any of the preceding claims, wherein the step of configuring comprises sending (62) configuration messages to the physical CDN caching nodes (35) for which a new configuration was computed.

9. The method of any of the preceding claims, wherein the method is executed in a client server software application running on the physical CDN caching nodes (35).

10. The method of claim 9, wherein the server application is running on at least two physical CDN caching nodes (35).

11. A distributed system (80) for configuring a network of Content Delivery Network, CDN, caching nodes comprising:
a hierarchy of virtual CDN caching nodes (30) collocated in a single layer of physical CDN caching nodes (35), each physical CDN caching node (35) running a client-server application and at least one physical CDN caching node (35) running a server instance of the client-server application, the at least one physical delivery node com prising a processor (1105) and memory (1110), said memory (1110) containing said server instance of the client-server application executable by said processor (1105) whereby said at least one physical CDN caching node (35) is operative to:
detect (41) a modification in the single layer of physical CDN caching nodes (35);
receive (43) traffic load information from the physical CDN caching nodes (35);
compute (60, 61) a new network configuration for the virtual CDN caching nodes (30) based on the detected modification, the received traffic load information and geographic locations of the physical CDN caching nodes (35); and
configure the single layer of physical CDN caching nodes (35) in accordance with the new network configuration.

12. The distributed system (80) of claim 11, wherein the virtual CDN caching nodes (30) in a first level of the hierarchy (30a) send delivery content towards virtual CDN caching nodes (30) in a second level of the hierarchy (30b),
wherein, optionally, a plurality of the physical CDN caching nodes (35) comprises a first virtual CDN caching node (30) in the first level of the hierarchy (30a) collocated with a second virtual CDN caching node (30) in the second level of the hierarchy (30b).

13. The distributed system of claim 11 or 12, wherein at least one of the physical CDN caching nodes (35) comprises a first and second collocated virtual CDN caching nodes (30) in a same level of the hierarchy (30a, 30b).

14. The distributed system (80) of claim 12 or 13, wherein the collocated first and second virtual CDN caching nodes (30) have access to a different proportion of a capacity of the physical CDN caching node (35).

15. The distributed system (80) of any of claims 11 to 14 , wherein the modification in the network of CDN caching nodes comprises an addition (48) of a physical CDN caching node (35), a removal (45) of a physical CDN caching node (35) or a change in a traffic load of at least one of the physical CDN caching nodes (35).

16. The distributed system (80) of any of claims 11 to15, wherein said system is further operative to:
receive a request for joining the network with a new physical CDN caching node (35) capacity and new physical CDN caching node (35) geographic location,
receive a request for leaving the network, and
receive a request for reconfiguration of the network with current traffic load for at least one physical CDN caching node (35).

17. The distributed system (80) of any of claims 11 to 16, wherein at least an identifier,
a capacity and a geographic location of each physical CDN caching node (35) of the network of CDN caching nodes are stored in a memory (1110),
wherein, optionally, said system is further operative to:
read (72) rules, stored in the memory (1110), associated with each of the physical CDN caching nodes (35);
compare (73) the capacities of the physical CDN caching nodes (35) to the traffic loads received; and
compute (73) the new network configuration satisfying the rules, for the virtual CDN caching nodes (30), based on the detected modification, and distribute a total traffic load to the physical CDN caching nodes (35) according to their capacities.

18. The distributed system (80) of any of claims 11 to 17, wherein said server is further operative to:
send (62) configuration messages to the physical CDN caching nodes (35) for which a new configuration was computed.

19. The distributed system (80) of any of claims 11 to 18, wherein a server instance of the application runs on at least two physical CDN caching nodes (35).

20. A server (1100) for configuring a network of Content Delivery Network, CDN, caching nodes deployed as a hierarchy of virtual CDN caching nodes (30) collocated in a single layer of physical CDN caching nodes (35), comprising a processor (1105) and a memory (1110), said memory (1110) containing instructions executable by said processor (1105) whereby said server (1100) is operative to:
detect (41) a modification in the single layer of physical CDN caching nodes (35);
receive (43) traffic load information from the physical CDN caching nodes (35);
compute (60, 61) a new network configuration for the virtual CDN caching nodes (30) based on the detected modification, the received traffic load information and geographic locations of the physical CDN caching nodes (35); and
configure the single layer of physical CDN caching nodes (35) in accordance with the new network configuration.

## Patentansprüche

1. Verfahren zum Konfigurieren eines Netzwerks von Content Delivery Network, CDN, Caching-Knoten, das als eine Hierarchie von virtuellen CDN Caching-Knoten (30) aufgebaut ist, die zusammen in einer einzelnen Schicht von physischen CDN Caching-Knoten (35) angeordnet sind, umfassend:
Erfassen (41) einer Modifikation in der einzelnen Schicht von physischen CDN Caching-Knoten (35);
Empfangen (43) von Verkehrslastinformationen von den physischen CDN Caching-Knoten (35);
Berechnen (60, 61) einer neuen Netzwerkkonfiguration für die virtuellen CDN Caching-Knoten (30) basierend auf der erfassten Modifikation, den empfangenen Verkehrslastinformationen und geographischen Lagen der physischen CDN Caching-Knoten (35); und
Konfigurieren der einzelnen Schicht von physischen CDN Caching-Knoten (35) gemäß der neuen Netzwerkkonfiguration.

2. Verfahren nach Anspruch 1, wobei die virtuellen CDN Caching-Knoten (30) auf einer ersten Stufe der Hierarchie (30a) Delivery Content zu virtuellen CDN Caching-Knoten (30) auf einer zweiten Stufe der Hierarchie (30b) senden,
wobei, als Option, eine Vielzahl der physischen CDN Caching-Knoten (35) einen ersten virtuellen CDN Caching-Knoten (30) auf der ersten Stufe der Hierarchie (30a) umfasst, der zusammen angeordnet ist mit einem zweiten virtuellen CDN Caching-Knoten (30) auf der zweiten Stufe der Hierarchie (30b).

3. Verfahren nach einem der vorherigen Ansprüche, wobei wenigstens einer der physischen CDN Caching-Knoten (35) einen ersten und zweiten zusammen angeordneten virtuellen CDN Caching-Knoten (30) auf einer gleichen Stufe der Hierarchie (30a, 30b) umfasst.

4. Verfahren nach Anspruch 2 oder 3, wobei die zusammen angeordneten ersten und zweiten virtuellen CDN Caching-Knoten (30) Zugriff auf einen unterschiedlichen Anteil einer Kapazität des physischen CDN Caching-Knotens (35) haben.

5. Verfahren nach einem der vorherigen Ansprüche, wobei die Modifikation in dem Netzwerk von CDN Caching-Knoten ein Hinzufügen (48) eines physischen CDN Caching-Knotens (35), ein Entfernen (45) eines physischen CDN Caching-Knotens (35) oder eine Veränderung in einer Verkehrslast von wenigstens einem der physischen CDN Caching-Knoten (35) umfasst.

6. Verfahren nach einem der vorherigen Ansprüche, wobei der Schritt des Erfassens (41) umfasst:
Empfangen einer Anfrage zum Beitreten dem Netzwerk mit einer neuen Kapazität und einer neuen geographischen Lage eines physischen CDN Caching-Knotens (35),
Empfangen einer Anfrage zum Verlassen des Netzwerks, oder
Empfangen einer Anfrage zur Rekonfiguration des Netzwerks mit einer derzeitigen Verkehrslast für wenigstens einen physischen CDN Caching-Knoten (35).

7. Verfahren nach einem der vorherigen Ansprüche, wobei wenigstens eine Kennzeichnung, eine Kapazität und eine geographische Lage jedes physischen CDN Caching-Knotens (35) des Netzwerks von CDN Caching-Knoten in einem Speicher (1110) gespeichert sind,
wobei, als Option, der Schritt des Berechnens (61) umfasst:
Lesen (72) von Regeln, gespeichert in dem Speicher (1110), welche jedem der physischen CDN Caching-Knoten (35) zugeordnet sind;
Vergleichen (73) der Kapazitäten der physischen CDN Caching-Knoten (35) mit den empfangenen Verkehrslasten; und
Berechnen (73) der die Regeln erfüllenden neuen Netzwerkkonfiguration für die virtuellen CDN Caching-Knoten (30) basierend auf der erfassten Modifikation, und Verteilen einer Gesamtverkehrslast an die physischen CDN Caching-Knoten (35) gemäß ihrer Kapazitäten.

8. Verfahren nach einem der vorherigen Ansprüche, wobei der Schritt des Konfigurierens ein Senden (62) von Konfigurationsnachrichten an die physischen CDN Caching-Knoten (35), für die eine neue Konfiguration berechnet wurde, umfasst.

9. Verfahren nach einem der vorherigen Ansprüche, wobei das Verfahren in einer Client-Server-Software-Anwendung ausgeführt wird, welche auf den physischen CDN Caching-Knoten (35) abläuft.

10. Verfahren nach Anspruch 9, wobei die Server-Anwendung wenigstens auf zwei physischen CDN Caching-Knoten (35) abläuft.

11. Verteiltes System (80) zum Konfigurieren eines Netzwerks von Content Delivery Network, CDN, Caching-Knoten, umfassend:
eine Hierarchie von virtuellen CDN Caching-Knoten (30), die zusammen in einer einzelnen Schicht von physischen CDN Caching-Knoten (35) angeordnet sind, wobei jeder physische CDN Caching-Knoten (35) eine Client-Server-Anwendung ausführt und wenigstens ein physischer CDN Caching-Knoten (35) eine Serverinstanz der Client-Server-Anwendung ausführt, wobei der wenigstens eine physische Delivery-Knoten einen Prozessor (1105) und einen Speicher (1110) umfasst, wobei der Speicher (1110) die Serverinstanz der Client-Server-Anwendung enthält, welche von dem Prozessor (1105) ausführbar ist, wodurch der wenigstens eine physische CDN Caching-Knoten (35) betreibbar ist zum:
Erfassen (41) einer Modifikation in der einzelnen Schicht von physischen CDN Caching-Knoten (35);
Empfangen (43) von Verkehrslastinformationen von den physischen CDN Caching-Knoten (35);
Berechnen (60, 61) einer neuen Netzwerkkonfiguration für die virtuellen CDN Caching-Knoten basierend auf der erfassten Modifikation, der erhaltenen Verkehrslastinformationen und geographischen Lagen der physischen CDN Caching-Knoten (35); und
Konfigurieren der einzelnen Schicht von physischen CDN Caching-Knoten (35) gemäß der neuen Netzwerkkonfiguration.

12. Verteiltes System (80) nach Anspruch 11, wobei die virtuellen CDN Caching-Knoten (30) auf einer ersten Stufe der Hierarchie (30a) Delivery Content zu virtuellen CDN Caching-Knoten (30) auf einer zweiten Stufe der Hierarchie (30b) senden,
wobei, als Option, eine Vielzahl der physischen CDN Caching-Knoten (35) einen ersten virtuellen CDN Caching-Knoten (30) auf der ersten Stufe der Hierarchie (30a) umfasst, der zusammen angeordnet ist mit einem zweiten virtuellen CDN Caching-Knoten (30) auf der zweiten Stufe der Hierarchie (30b).

13. Verteiltes System nach Anspruch 11 oder 12, wobei wenigstens einer der physischen CDN Caching-Knoten (35) einen ersten und zweiten zusammen angeordneten virtuelle CDN Caching-Knoten (30) auf einer gleichen Stufe der Hierarchie (30a, 30b) umfasst.

14. Verteiltes System (80) nach Anspruch 12 oder 13, wobei die zusammen angeordneten ersten und zweiten virtuellen CDN Caching-Knoten (30) Zugriff auf einen unterschiedlichen Anteil einer Kapazität des physischen CDN Caching-Knotens (30) haben.

15. Verteiltes System (80) nach einem der Ansprüche 11 bis 14, wobei die Modifikation in dem Netzwerk von CDN Caching-Knoten ein Hinzufügen (48) eines physischen CDN Caching-Knotens (35), ein Entfernen (45) eines physischen CDN Caching-Knotens (35) oder eine Änderung in einer Verkehrslast von wenigstens einem der physischen CDN Caching-Knoten (35) umfasst.

16. Verteiltes System (80) nach einem der Ansprüche 11 bis 15, wobei das System weiter betreibbar ist zum:
Empfangen einer Anfrage zum Beitreten dem Netzwerk mit einer neuen Kapazität und einer neuen geographischen Lage eines physischen CDN Caching-Knotens (35),
Empfangen einer Anfragen zum Verlassen des Netzwerks, und
Empfangen einer Anfrage zur Rekonfiguration des Netzwerks mit einer derzeitigen Verkehrslast für wenigstens einen physischen CDN Caching-Knoten (35).

17. Verteiltes System (80) nach einem der Ansprüche 11 bis 16, wobei wenigstens eine Kennzeichnung, eine Kapazität und eine geographische Lage jedes physischen CDN Caching-Knotens (35) des Netzwerks von CDN Caching-Knoten in einem Speicher (1110) gespeichert sind,
wobei, als Option, das System weiter betreibbar ist zum:
Lesen (72) von Regeln, gespeichert in dem Speicher (1110), welche jedem der physischen CDN Caching-Knoten (35) zugeordnet sind;
Vergleichen (73) der Kapazitäten der physischen CDN Caching-Knoten (35) mit den empfangenen Verkehrslasten; und
Berechnen (73) der die Regeln erfüllenden neuen Netzwerkkonfiguration für die virtuellen CDN Caching-Knoten (30) basierend auf der erfassten Modifikation, und Verteilen einer Gesamtverkehrslast an die physischen CDN Caching-Knoten (35) gemäß ihren Kapazitäten.

18. Verteiltes System (80) nach einem der Ansprüche 11 bis 17, wobei der Server weiter betreibbar ist zum:
Senden (62) von Konfigurationsnachrichten an die physischen CDN Caching-Knoten (35), für die eine neue Konfiguration berechnet wurde.

19. Verteiltes System (80) nach einem der Ansprüche 11-18, wobei eine Serverinstanz der Anwendung auf wenigstens zwei physischen CDN Caching-Knoten (35) abläuft.

20. Server (1100) zum Konfigurieren eines Netzwerks von Content Delivery Network, CDN, Caching-Knoten, das als eine Hierarchie von virtuellen CDN Caching-Knoten (30) aufgebaut ist, die zusammen in einer einzelnen Schicht von physischen CDN Caching-Knoten (35) angeordnet sind, umfassend
einen Prozessor (1105) und einen Speicher (1110), wobei der Speicher (1110) Anweisungen enthält, welche von dem Prozessor (1105) ausführbar sind, wodurch der Server (1100) betreibbar ist zum:
Erfassen (41) einer Modifikation in der einzelnen Schicht von physischen CDN Caching-Knoten (35);
Empfangen (43) von Verkehrslastinformationen von den physischen CDN Caching-Knoten (35);
Berechnen (60, 61) einer neuen Netzwerkkonfiguration für die virtuellen CDN Caching-Knoten (30) basierend auf der erfassten Modifikation, den empfangenen Verkehrslastinformationen und geographischen Lagen der physischen CDN Caching-Knoten (35); und
Konfigurieren der einzelnen Schicht von physischen CDN Caching-Knoten (35) gemäß der neuen Netzwerkkonfiguration.

## Revendications

1. Procédé de configuration d'un réseau de noeuds de mise en mémoire cache d'un réseau de distribution de contenu, CDN, déployés sous la forme d'une hiérarchie de noeuds de mise en mémoire cache CDN virtuels (30) colocalisés dans une couche unique de noeuds de mise en mémoire cache CDN physiques (35), comprenant :
détecter (41) une modification dans la couche unique de noeuds de mise en mémoire cache CDN physiques (35) ;
recevoir (43) des informations de charge de trafic en provenance des noeuds de mise en mémoire cache CDN physiques (35) ;
calculer (60, 61) une nouvelle configuration de réseau pour les noeuds de mise en mémoire cache CDN virtuels (30) sur la base de la modification détectée, des informations de charge de trafic reçues et des emplacements géographiques des noeuds de mise en mémoire cache CDN physiques (35) ; et
configurer la couche unique de noeuds de mise en mémoire cache CDN physiques (35) en fonction de la nouvelle configuration de réseau.

2. Procédé selon la revendication 1, dans lequel les noeuds de mise en mémoire cache CDN virtuels (30) dans un premier niveau de la hiérarchie (30a) envoient un contenu de distribution vers des noeuds de mise en mémoire cache CDN virtuels (30) dans un deuxième niveau de la hiérarchie (30), dans lequel, optionnellement, une pluralité de noeuds de mise en mémoire cache CDN physiques (35) comprend un premier noeud de mise en mémoire cache CDN virtuel (30) dans le premier niveau de la hiérarchie (30a) colocalisé avec un deuxième noeud de mise en mémoire cache CDN virtuel (30) dans le deuxième niveau de la hiérarchie (30b).

3. Procédé selon l'une quelconque des revendications précédentes, dans lequel au moins un des noeuds de mise en mémoire cache CDN physiques (35) comprend un premier et un second noeud de mise en mémoire cache CDN virtuel (30) dans un même niveau de la hiérarchie (30a, 30b).

4. Procédé selon la revendication 2 ou 3, dans lequel les premier et deuxième noeuds de mise en mémoire cache CDN virtuels (30) colocalisés ont accès à une proportion différente d'une capacité du noeud de mise en mémoire cache CDN physique (35).

5. Procédé selon l'une quelconque des revendications précédentes, dans lequel la modification dans le réseau de noeuds de mise en mémoire cache CDN comprend un ajout (48) d'un noeud de mise en mémoire cache CDN physiques (35), une suppression (45) d'un noeud de mise en mémoire cache CDN physique (35) ou un changement d'une charge de trafic d'au moins l'un des noeuds de mise en mémoire cache CDN physiques (35).

6. Procédé selon l'une quelconque des revendications précédentes, dans lequel l'étape de détecter (41) comprend recevoir une demande d'entrée dans le réseau avec une nouvelle capacité de noeud de mise en mémoire cache CDN physique (35) et un nouvel emplacement géographique de noeud de mise en mémoire cache CDN physique (35), recevoir d'une demande de sortie du réseau, ou
recevoir une demande de reconfiguration du réseau avec une charge de trafic actuelle pour au moins un noeud de mise en mémoire cache CDN physique (35).

7. Procédé selon l'une quelconque des revendications précédentes, dans lequel au moins un identificateur, une capacité et un emplacement géographique de chaque noeud de mise en mémoire cache CDN physique (35) du réseau de noeuds de mise en mémoire cache CDN sont stockés dans une mémoire (1110), dans lequel, optionnellement, l'étape de calculer (61) comprend :
lire (72) des règles, stockées dans la mémoire (1110), associées à chacun des noeuds de mise en mémoire cache CDN physiques (35) ;
comparer (73) les capacités des noeuds de mise en mémoire cache CDN physiques (35) aux charges de trafic reçues ; et
calculer (73) la nouvelle configuration de réseau satisfaisant les règles, pour les noeuds de mise en mémoire cache CDN virtuels (30), sur la base de la modification détectée, et distribuer une charge de trafic totale sur les noeuds de mise en mémoire cache CDN physiques (35) en fonction de leurs capacités.

8. Procédé selon l'une quelconque des revendications précédentes, dans lequel l'étape de configurer comprend envoyer (62) des messages de configuration aux noeuds de mise en mémoire cache CDN physiques (35) pour lesquels une nouvelle configuration a été calculée.

9. Procédé selon l'une quelconque des revendications précédentes, dans lequel le procédé est exécuté dans une application logicielle client-serveur s'exécutant sur les noeuds de mise en mémoire cache CDN physiques (35).

10. Procédé selon la revendication 9, dans lequel l'application de serveur s'exécute sur au moins deux noeuds de mise en mémoire cache CDN physiques (35).

11. Système réparti (80) pour configurer un réseau de noeuds de mise en mémoire cache d'un réseau de distribution de contenu, CDN, comprenant :
une hiérarchie de noeuds de mise en mémoire cache CDN virtuels (30) colocalisés dans une couche unique de noeuds de mise en mémoire cache CDN physiques (35), chaque noeud de mise en mémoire cache CDN physique (35) exécutant une application client-serveur et au moins un noeud de mise en mémoire cache CDN physique (35) exécutant une instance de serveur de l'application client-serveur, l'au moins un noeud de distribution physique comprenant un processeur (1105) et une mémoire (1110), ladite mémoire (1110) contenant ladite instance de serveur de l'application client-serveur exécutable par ledit processeur (1105) de telle manière que ledit au moins un noeud de mise en mémoire cache CDN physique (35) est opérationnel pour:
détecter (41) une modification dans la couche unique de noeuds de mise en mémoire cache CDN physiques (35) ;
recevoir (43) des informations de charge de trafic en provenance des noeuds de mise en mémoire cache CDN physiques (35) ;
calculer (60, 61) une nouvelle configuration de réseau pour les noeuds de mise en mémoire cache CDN virtuels (30) sur la base de la modification détectée, des informations de charge de trafic reçues et des emplacements géographiques des noeuds de mise en mémoire cache CDN physiques (35) ; et
configurer la couche unique de noeuds de mise en mémoire cache CDN physiques (35) en fonction de la nouvelle configuration de réseau.

12. Système réparti (80) selon la revendication 11, dans lequel les noeuds de mise en mémoire cache CDN virtuels (30) dans un premier niveau de la hiérarchie (30a) envoient un contenu de distribution vers des noeuds de mise en mémoire cache CDN virtuels (30) dans un deuxième niveau de la hiérarchie (30b), dans lequel, optionnellement, une pluralité de noeuds de mise en mémoire cache CDN physiques (35) comprend un premier noeud de mise en mémoire cache CDN virtuel (30) dans le premier niveau de la hiérarchie (30a) colocalisé avec un deuxième noeud de mise en mémoire cache CDN virtuel (30) dans le deuxième niveau de la hiérarchie (30b).

13. Système réparti selon la revendication 11 ou 12, dans lequel au moins l'un des noeuds de mise en mémoire cache CDN physiques (35) comprend un premier et un second noeud de mise en mémoire cache CDN virtuel (30) colocalisés dans un même niveau de la hiérarchie (30a, 30b).

14. Système réparti (80) selon la revendication 12 ou 13, dans lequel les premier et deuxième noeuds de mise en mémoire cache CDN virtuels (30) colocalisés ont accès à une proportion différente d'une capacité du noeud de mise en mémoire cache CDN physique (35).

15. Système réparti (80) selon l'une quelconque des revendications 11 à 14, dans lequel la modification dans le réseau de noeuds de mise en mémoire cache CDN comprend un ajout (48) d'un noeud de mise en mémoire cache CDN physique (35), une suppression (45) d'un noeud de mise en mémoire cache CDN physique (35) ou un changement d'une charge de trafic d'au moins l'un des noeuds de mise en mémoire cache CDN physiques (35).

16. Système réparti (80) selon l'une quelconque des revendications 11 à 15, dans lequel ledit système est en outre opérationnel pour:
recevoir une demande d'entrée dans le réseau avec une nouvelle capacité de noeud de mise en mémoire cache CDN physique (35) et un nouvel emplacement géographique de noeud de mise en mémoire cache CDN physique (35),
recevoir une demande de sortie du réseau, ou
recevoir une demande de reconfiguration du réseau avec une charge de trafic actuelle pour au moins un noeud de mise en mémoire cache CDN physique (35).

17. Système réparti (80) selon l'une quelconque des revendications 11 à 16, dans lequel au moins un identificateur, une capacité et un emplacement géographique de chaque noeud de mise en mémoire cache CDN physique (35) du réseau de noeuds de mise en mémoire cache CDN sont stockés dans une mémoire (1110), dans lequel, optionnellement, ledit système est en outre opérationnel pour:
lire (72) des règles, stockées dans la mémoire (1110), associées à chacun des noeuds de mise en mémoire cache CDN physiques (35) ;
comparer (73) les capacités des noeuds de mise en mémoire cache CDN physiques (35) aux charges de trafic reçues ; et
calculer (73) la nouvelle configuration de réseau satisfaisant les règles, pour les noeuds de mise en mémoire cache CDN virtuels (30), sur la base de la modification détectée, et distribuer une charge de trafic totale sur les noeuds de mise en mémoire cache CDN physiques (35) en fonction de leurs capacités.

18. Système réparti (80) selon l'une quelconque des revendications 11 à 17, dans lequel ledit serveur est en outre opérationnel pour:
envoyer (62) des messages de configuration aux noeuds de mise en mémoire cache CDN physiques (35) pour lesquels une nouvelle configuration a été calculée.

19. Système réparti (80) selon l'une quelconque des revendications 11 à 18, dans lequel une instance de serveur de l'application s'exécute sur au moins deux noeuds de mise en mémoire cache CDN physiques (35).

20. Serveur (1100) pour configurer un réseau de noeuds de mise en mémoire cache d'un réseau de distribution de contenu, CDN, déployés sous la forme d'une hiérarchie de noeuds de mise en mémoire cache CDN virtuels (30) colocalisés dans une couche unique de noeuds de mise en mémoire cache CDN physiques (35), comprenant un processeur (1105) et une mémoire (1110), ladite mémoire (1110) contenant des instructions exécutables par ledit processeur (1105) de telle manière que ledit serveur (1100) est opérationnel pour:
détecter (41) une modification dans la couche unique de noeuds de mise en mémoire cache CDN physiques (35) ;
recevoir(43) des informations de charge de trafic en provenance des noeuds de mise en mémoire cache CDN physiques (35) ;
calculer (60, 61) une nouvelle configuration de réseau pour les noeuds de mise en mémoire cache CDN virtuels (30) sur la base de la modification détectée, des informations de charge de trafic reçues et des emplacements géographiques des noeuds de mise en mémoire cache CDN physiques (35) ; et
configurer la couche unique de noeuds de mise en mémoire cache CDN physiques (35) en fonction de la nouvelle configuration de réseau.
